(19) Europäisches Patentamt
European Patent Office
Office européen des brevets

(11) **EP 3 205 630 B1**

(12) **EUROPÄISCHE PATENTSCHRIFT**

(45) Veröffentlichungstag und Bekanntmachung des Hinweises auf die Patenterteilung:
**01.01.2020 Patentblatt 2020/01**

(51) Int Cl.:
***C03C 3/06*** *(2006.01)*     ***C03B 20/00*** *(2006.01)*

(21) Anmeldenummer: **16157577.4**

(22) Anmeldetag: **26.02.2016**

(54) **DIFFUSORMATERIAL AUS SYNTHETISCH ERZEUGTEM QUARZGLAS SOWIE VERFAHREN ZUR HERSTELLUNG EINES VOLLSTÄNDIG ODER TEILWEISE DARAUS BESTEHENDEN FORMKÖRPERS**

DIFFUSER MATERIAL MADE OF SYNTHETICALLY PRODUCED QUARTZ GLASS, METHOD FOR PREPARING A SHAPED BODY MADE FULLY OR PARTIALLY FROM SAME

MATERIAU DIFFUSEUR EN VERRE DE QUARTZ SYNTHETIQUE ET PROCEDE DE FABRICATION D'UN CORPS DE MOULAGE EN ETANT TOTALEMENT OU PARTIELLEMENT CONSTITUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.02.2016 EP 16155505**

(43) Veröffentlichungstag der Anmeldung:
**16.08.2017 Patentblatt 2017/33**

(73) Patentinhaber: **Heraeus Quarzglas GmbH & Co. KG**
**63450 Hanau (DE)**

(72) Erfinder:
• **Scheich, Gerrit**
  **63500 Seligenstadt (DE)**
• **Nuernberg, Frank**
  **63739 Aschaffenburg (DE)**
• **Goetzendorfer, Andreas**
  **63743 Aschaffenburg (DE)**
• **Tscholitsch, Nadine**
  **63457 Hanau (DE)**

• **Franz, Bernhard**
  **35398 Gießen (DE)**
• **Klett, Ursula**
  **63452 Hanau (DE)**
• **Donelon, Matthew**
  **Round Rock, TX Texas 78664 (US)**

(74) Vertreter: **Staudt, Armin Walter**
**Sandeldamm 24a**
**63450 Hanau (DE)**

(56) Entgegenhaltungen:
**EP-A1- 2 982 780     WO-A1-2015/067688
US-A- 5 674 792      US-A1- 2003 027 705
US-A1- 2010 316 858**

Bemerkungen:
Die Akte enthält technische Angaben, die nach dem Eingang der Anmeldung eingereicht wurden und die nicht in dieser Patentschrift enthalten sind.

## Beschreibung

### Technologischer Hintergrund

Die Erfindung betrifft ein Diffusormaterial aus synthetisch erzeugtem, Poren enthaltendem Quarzglas mit einer chemischen Reinheit von mindestens 99,9% $SiO_2$, einem Cristobalitgehalt von höchstens 1 % und einer Dichte im Bereich von 2,0 bis 2,18 $g/cm^3$.

Weiterhin geht es in der Erfindung um ein Verfahren zur Herstellung eines Formkörpers, der mindestens teilweise aus einem Diffusormaterial aussynthetisch erzeugtem Quarzglas besteht, indem aus einem Schlicker, der eine Dispersionsflüssigkeit und synthetisch erzeugte $SiO_2$-Pulverteilchen mit einer Reinheit von mindestens 99,9% $SiO_2$ enthält ein Grünkörper erzeugt und der Grünkörper durch Sintern zu dem Diffusormaterial verarbeitet wird.

Diffusormaterialien werden als Vollkörper oder Beschichtungen in optischen Komponenten eingesetzt, die eine gleichmäßige, diffuse Ausleuchtung ermöglichen sollen. Die ideal diffus reflektierende Fläche ist nicht spiegelnd und reflektiert optische Strahlung gemäß dem Lambertschen Gesetz. Dieses beschreibt die Abnahme der Strahlungsstärke mit flacher werdendem Abstrahlwinkel, so dass sich bei konstanter Strahldichte über der Fläche eine kreisförmige Verteilung der Strahlstärke ergibt.

### Stand der Technik

Einen Industriestandard in dieser Hinsicht bildet "Spectralon" (Handelsname der Firma Labsphere, Inc.). Dieses Material wird beispielsweise als Reflexionsstandard in Kalibriermustern, Ulbricht-Kugeln und Lasern benutzt. Herstellung und Eigenschaften sind in der US 5,462,705 A beschrieben. Es besteht aus gesintertem Polytetrafluorethylen (PTFE), das ein poröses Netzwerk aus Molekülketten bildet. Die poröse Struktur erzeugt an der Oberfläche und innerhalb einer dünnen Schicht unterhalb derselben vielfache innere Reflexionen, so dass auf die Oberfläche auftreffendes Licht diffus reflektiert wird. "Spectralon" zeigt einen flachen Spektralverlauf bei einer Reflektivität von mehr als 99% und lambertsches Reflexionsverhalten über einen breiten Wellenlängenbereich vom Infraroten bis hinab zu Wellenlängen von etwa 300 nm.

Allerdings verändern sich die optischen Eigenschaften des Kunststoffmaterials mit der Zeit, so dass es bei Mess-Anwendungen häufig nachkalibriert werden muss. Wegen seiner geringen Dichte im Bereich von 1,25 - 1,5 $g/cm^3$ zeigt "Spectralon" eine geringe mechanische Stabilität und auch seine Temperaturstabilität genügt nur für Anwendungen bei Temperaturen bis maximal etwa 400 °C.

Einen Teil dieser Nachteile vermeidet ein mechanisch und thermisch stabileres Diffusormaterial aus synthetisch erzeugtem Quarzglas gemäß der eingangs genannten Gattung, wie beschrieben im Paper von John D. Mason et al. "A new Robust Commercial Diffuse Reflector for UV-VIS Applications"; Journal Applied Optics, Vol. 54 (25); 25.08.15; Journal ID: ISSN 0003-6935; http://dx.doi.org/10.1364/AO.54.007542. Das als "HOD-300" bezeichnete Diffusormaterial aus synthetisch erzeugtem Quarzglas enthält eine Vielzahl von Poren mit Porenabmessungen im Bereich von 1 bis 10 $\mu$m und es ist maschinell bearbeitbar. Es zeigt im Wellenlängenbereich vom 250 bis etwa 1100 nm eine konstant hohe Reflektivität von deutlich mehr als 99 %. Die Herstellung des Diffusormaterials aus synthetischem Quarzglas wird in diesem Paper nicht erläutert.

Das gattungsgemäße Herstellungsverfahren für opakes synthetisches Quarzglas ist aus der DE 102 43 953 A1 bekannt. Als Ausgangsmaterial wird ein SiO2-Granulat aus porösen SiO2-Granulatteilchen eingesetzt, die unter Einsatz nanoskaliger, amorpher, synthetisch erzeugter SiO2-Primärteilchen mittels Rollgranulierverfahren erhalten werden. Die Größen der Granulatteilchen liegen zwischen 100 $\mu$m bis 500 $\mu$m. Aus diesem Rohgranulat wird durch Behandlung im Drehrohrofen bei einer Temperatur von 1200 °C in chlorhaltiger Atmosphäre thermisch verfestigtes poröses "Feingranulat", und bei einem Teil davon durch Erhitzen auf eine Temperatur von 1450 °C vollständig verglaste, synthetische Quarzglaskörnung erzeugt. Die Teilchen des Feingranulats und der Quarzglaskörnung haben eine mittlere Größe (Median- oder D50-Wert) von weniger als 160 $\mu$m. Der D50-Wert repräsentiert dabei diejenige Teilchengröße, die von 50% des kumulativen Teilchenvolumens nicht erreicht wird.

Eine Aufbereitung einer 50:50-Mischung von SiO2-Feingranulat und Quarzglaskörnung wird in deionisiertes Wasser eingerührt. In einer mit Polyurethan ausgekleideten Kugelmühle wird die Dispersion ca. eine Stunde lang homogenisiert und anschließend in eine poröse Kunststoffform abgegossen, in der die Entwässerung und Scherbenbildung unter Bildung eines offenporigen Grünkörpers erfolgt. Bereits beim Trocknen kommt es zu einer festen Verbindung zwischen den einzelnen Granulatteilchen und zu einer Verdichtung und Verfestigung des Grünkörpers, die das nachfolgende Sintern zu dem opaken Quarzglas erleichtern. Die dabei erzielten spezifischen Dichten liegen im Bereich von 2,10 g/cm3 bis 2,18 $g/cm^3$.

Bei einer Abwandlung dieses Verfahrensweise, gemäß der WO 2008/040615 A1 wird anstelle thermisch verdichteter $SiO_2$-Granulatkörner als Ausgangsmaterial für die wässrige Dispersion eine Mischung aus $SiO_2$-Nanoteilchen und sphärischen Teilchen aus synthetisch erzeugtem Quarzglas mit einem $SiO_2$-Gehalt von mindestens 99,9 Gew.-% eingesetzt. Die sphärischen Quarzglas-Teilchen zeigen eine mehrmodale Teilchengrößenverteilung mit einem ersten Maximum der Größenverteilung im Bereich von 1 und 3 $\mu$m und einem zweiten Maximum im Bereich von 5 bis 50 $\mu$m. Beispielsweise können Teilchenverteilungen mit $D_{50}$-Werten von 2, 5, 15,

30 und 40 $\mu$m zum Einsatz kommen. Der Feststoffgehalt der Dispersion (Gewichtsanteil der sphärischen $SiO_2$-Teilchen und der $SiO_2$-Nanoteilchen zusammen) liegt zwischen 83 % und 90 %. Die mehrmodale Teilchengrößenverteilung der amorphen $SiO_2$-Teilchen und der hohe Feststoffgehalt führen zu einer gleichmäßigen und geringen Schwindung der Dispersion nach dem Formgießen, wozu der Zusatz an $SiO_2$-Nanoteilchen beiträgt, indem dieser die Wechselwirkungen zwischen den amorphen $SiO_2$-Teilchen, wie sie oben bereits erläutert sind, noch verstärkt.

Zur Herstellung einer optisch homogenen und ästhetisch ansprechenden Reflektorschicht aus opakem Quarzglas wird die Dispersion unter Einsatz einer Rakeleinrichtung auf der gewölbten Oberfläche eines Lampenrohres gleichmäßig verteilt. Die nach dem Trocknen und Sintern in einem Sinterofen bei 1280 °C und einer Sinterdauer von 3h unter Luft erhaltene Reflektorschicht zeigt bei einer Dicke von 0,8 mm im Wellenlängenbereich von 300 bis 2100 nm eine (mittels einer Ulbrichtkugel ermittelte) hemisphärische Reflektivität mit einem in etwa gleichmäßigen Reflexionsgrad um 95 % (bezogen auf die Reflektivität von "Spectralon"). Bei einer Wellenlänge von 210 nm liegt der Reflexionsgrad sogar höher als 98 %.

Die Dokumente US 5,674,792 B, US 2010/0316858 A1 und US 2003/0027705 A1 beschreiben Quarzgläser und deren Herstellungsverfahren.

Technische Aufgabenstellung

Aufgrund der genannten charakteristischen Eigenschaften ist synthetisch erzeugtes opakes Quarzglas grundsätzlich als Diffusormaterial für einen spektralen, optischen Diffusor prädestiniert, wenn beim Einsatz hohe korrosive, mechanische und thermischer Belastungen zu erwarten sind. Allerdings sind neben Lambertschem Verhalten für einen qualitativ hochwertigen Diffusor auch Materialhomogenität, und bei einigen Anwendungen auch Beständigkeit gegenüber-UV-Strahlung wichtige Materialparameter. Diese Anforderungen erfüllen die bisher bekannten Diffusormaterialien aus opakem synthetischem Quarzglas r nicht in hinreichendem Maß.

Der Erfindung liegt daher die Aufgabe zugrunde, ein Diffusormaterial bereitzustellen, das sich im Vergleich zu den bekannten synthetisch erzeugten, opaken Quarzgläsern nicht nur durch diffuse Reflektivität mit Lambertschem Verhalten über einen breiten Wellenlängenbereich, sondern auch durch seine Materialhomogenität und UV-Strahlenbeständigkeit auszeichnet.

Außerdem liegt der Erfindung die Aufgabe zugrunde, ein Verfahren anzugeben, das eine reproduzierbare Herstellung eines solchen Diffusormaterials ermöglicht.

Allgemeine Darstellung der Erfindung

Hinsichtlich des Diffusormaterials wird diese Aufgabe ausgehend von dem Material der eingangs genannten Gattung erfindungsgemäß dadurch gelöst, dass das Quarzglaseinen Hydroxylgruppengehalt im Bereich von mindestens 200 Gew.-ppm aufweist und mindestens 80% der Poren eine maximale Porenabmessung von weniger als 20 $\mu$m aufweisen.

Das erfindungsgemäße Diffusormaterial ist als Diffusor für einen Einsatz sowohl für diffuse Reflexion der auftreffenden Strahlung (im Folgenden als Reflexionsmodus bezeichnet) als auch als diffuser Strahler bei Transmission der Strahlung (im Folgenden als Transmissionsmodus bezeichnet) geeignet.

Im Transmissionsmodus wird die transmittierte Lichtmenge beispielsweise mittels des Messprinzips der integrierenden Kugel (Ulbricht-Kugel) bei Raumtemperatur als gerichtet-hemisphärischer Transmissionsgrad erfasst. Dieser hängt bei opakem Material stark von der durchstrahlten Dicke ab. Dementsprechend wird im Reflexionsmodus die reflektierte Lichtmenge typischerweise als gerichtet-hemisphärischer Reflexionsgrad mittels Ulbricht-Kugel ermittelt.

- Das Diffusormaterial gemäß der Erfindung besteht aus synthetisch erzeugtem Quarzglas. Synthetisches Quarzglas zeichnet sich durch hohe Reinheit und bei Transparenz durch eine hohe direkte Transmission für optische Strahlung über einen breiten Wellenlängenbereich aus, auch für UV-Strahlung mit Wellenlängen von weniger als 300 nm. Beim erfindungsgemäßen Diffusormaterial wird die direkte Transmission durch die Porosität des Quarzglases vermindert. Dennoch begünstigt die geringe intrinsische Absorption die Effektivität des Streuverhaltens und damit die diffuse Reflexion und die diffuse Transmission, insbesondere im UV-Wellenlängenbereich. Das synthetische Quarzglas wird unter Einsatz eines synthetisch erzeugten siliziumhaltigen Ausgangsmaterials erzeugt. Es ist hochrein in dem Sinne, dass die Hauptkomponente $SiO_2$ ist und unerwünschte Verunreinigungen maximal im sub-ppm-Bereich enthalten sind.

- Synthetisch erzeugtes Quarzglas ist im Vergleich zu einem aus natürlich vorkommendem $SiO_2$-Rohstoff erschmolzenen Quarzglas weniger anfällig für Solarisation und zeigt eine höhere Beständigkeit gegenüber energiereicher UV-Strahlung. Um eine weitergehende Verbesserung hinsichtlich der Beständigkeit gegenüber UV-Strahlung zu erreichen, enthält das synthetische Quarzglas Hydroxylgruppen in einer Konzentration von 200 Gew.-ppm oder mehr und bevorzugt im Bereich von 450 +/- 50 Gew.-ppm. Hydroxylgruppen bewirken eine Absenkung der Viskosität von Quarzglas. Daher sind Hydroxylgruppen im Hinblick auf hohe Formstabilität bei thermischer Belastung des Quarzglas-Bauteils unerwünscht. Es hat sich aber gezeigt, dass Hydroxylgruppen in der spezifizierten Konzentration dem Diffusormaterial eine höhere Strahlenbeständigkeit gegenüber UV-Strahlung verleihen Ein Hydroxylgruppengehalt von mehr als 500 Gew.-ppm ist jedoch nicht bevorzugt.

- Die Opazität des Diffusormaterials wird durch Anzahl, Größe und Form der Poren bestimmt. Diese wirken in der Quarzglas-Matrix als optische Störstellen und führen dazu, dass der Diffusormaterial - je nach Schichtdicke - opaktransluzent oder undurchsichtig erscheint. Die Poren sind möglichst klein und gleichmäßig im Quarzglas-Diffusormaterial verteilt. Mindestens 80% der Poren haben eine Porengröße von weniger als 20 μm, vorzugsweise weniger als 15 μm und besonders bevorzugt weniger als 10 μm. Der genannte Porenanteil von 80 % bezieht sich nur auf Poren mit einer Porengröße von mehr als 1μm. Die Poren haben vorzugsweise eine nicht sphärische Form mit Ausbuchtungen. Dies wird weiter unten anhand der Beschreibung des erfindungsgemäßen Verfahrens noch näher erläutert. Diese unregelmäßigen Formen tragen zu einer effektiveren Lichtstreuung innerhalb des Diffusormaterials bei. Die Porengröße ist der maximale Abstand zwischen zwei gegenüberliegenden Porenwänden einer Pore. Dieser maximale Abstand wird aufgrund mikroskopischer Bildanalyse analog des so genannten "Feret-Durchmessers" von Partikeln ermittelt, wie definiert in Norm DIN 66141 und ISO-13322-2. Das erfindungsgemäße opake Quarzglas zeichnet sich aus durch diffuse Reflektivität beziehungsweise diffuse Transmissivität mit Lambertschem Verhalten über einen breiten Wellenlängenbereich zwischen 250 nm und 2500 nm. Das Diffusormaterial ist mechanisch und thermisch vergleichsweise stabil und gasdicht - hat also keine offene Porosität. Er kann als diffus reflektierendes beziehungsweise transmittierendes Bauteil oder als Schicht auf einem Substrat vorliegen und ist auch für Anwendungen geeignet, bei denen es auf eine hohe thermische und chemische Stabilität und auf eine hohe Beständigkeit gegenüber ätzend wirkenden Gasen und Flüssigkeiten ankommt.

Der Grad der diffusen Streuung an Poren ist abhängig von Größe und Anzahl der Poren. Im Hinblick darauf hat es sich bewährt, wenn das Porenvolumen im Bereich von 0,9% bis 5% liegt und dabei bevorzugt mehr als 2,5% beträgt.

Das "Porenvolumen" eines porösen Materials bezeichnet das von Hohlräumen belegte, freie Volumen innerhalb des Materials. Das Porenvolumen wird anhand einer Dichtemessung ermittelt.

Im Hinblick auf eine gleichmäßige Porenverteilung und eine hohe Homogenität der Streueigenschaften hat sich ein Diffusormaterial bewährt, bei dem die Dichteverteilung in dem Sinne homogen ist, dass fünf über eine Messlänge von 5 cm gleichmäßig verteilte Dichtemessproben mit einem Probenvolumen von 1 cm³ eine Spannweite der spezifischen Dichte von weniger als 0,01 g/cm³ aufweisen.

Das Quarzglas des erfindungsgemäßen Diffusormaterials weist vorzugsweise einen Gesamt-Verunreinigungsgehalt an Li, Na, K, Mg, Ca, Fe, Cu, Cr, Mn, Ti, Al, Zr, Ni, Mo und W von maximal 0,5 Gew.-ppm auf.

Das synthetische Quarzglas gewährleistet eine hohe chemische Reinheit mit einem $SiO_2$-Gehalt von mindestens 99,9 Gew.-% $SiO_2$, bevorzugt mindestens 99,99 Gew.-% $SiO_2$, so dass optische Absorption durch Fremdatome minimiert und insbesondere die Absorption im tiefen UV-Bereich verringert wird.

Die Streueigenschaften und die Opazität des Diffusormaterials hängen werden von der Differenz der Brechungsindizes von Poren und Quarzglas-Matrix beeinflusst. Je höher dieser Brechungsindexunterschied ist, umso höher ist der Grad der Streuung und Opazität. Der Brechungsindex der Poren hängt davon ab, ob darin Vakuum herrscht oder ein Gas enthalten ist und gegebenenfalls von der Art des Gases ab. Das Gas kann Sauerstoff, Stickstoff, Argon, Helium oder Wasserstoff oder Mischungen davon sein, wie beispielsweise Luft. In einer besonders bevorzugten Ausführungsform des erfindungsgemäßen Diffusormaterials enthalten jedoch die Poren Neon.

Neongas hat einen im Vergleich zu anderen Gasen niedrigen Brechungsindex. Der Brechungsindex von Helium oder Wasserstoff ist zwar noch niedriger. Jedoch können diese Gase wegen ihres hohen Diffusionsvermögens und ihrer Löslichkeit in Quarzglas aus den Poren entweichen, so dass die Poren während des Sinterns kollabieren. Das gleiche geschieht mit Poren unter Vakuum. Neon ist dasjenige Gas mit dem niedrigsten Brechungsindex, das sich im Quarzglas nicht auflöst. Daher weisen die Neon enthaltenden Poren einen niedrigen Brechungsindex auf und sie verschwinden auch nicht während des Sinterns. Im Idealfall ist der gesamte Gasgehalt in den Poren ist Neon; eine signifikante Wirkung auf die Opazität wird aber bereits erreicht wenn der Neongas-Anteil mindestens 5 Vol.-% (bezogen auf das gesamte Gasvolumen in den Poren) beträgt. Bevorzugt ist er mindestens 30 Vol.-% und besonders bevorzugt mindestens 50 Vol.-%. Insbesondere im Hinblick auf eine hohe UV-Strahlenbeständigkeit enthält das Quarzglas Wasserstoff in einer Konzentration im Bereich von $10^{17}$ Molekülen/cm³ bis $10^{19}$ Molekülen/cm³.

Wasserstoff ist in der Lage, strukturelle Defekte des Quarzglas-Netzwerks, die entstehen können, wenn das Diffusormaterial kurzwelliger, energiereicher UV-Strahlung ausgesetzt wird, auszuheilen. Dies macht sich in einer besseren Langzeitstabilität des erfindungsgemäßen Diffusormaterials bemerkbar. Die dafür geeignete Wasserstoffbeladung richtet sich nach den spezifischen Anwendungsbedingungen ab, insbesondere der Strahlungsdosis. Bei Konzentrationen von weniger $10^{17}$ Molekülen/cm³ ist die defektausheilende Wirkung gering; Konzentrationen von mehr als $10^{19}$ Molekülen/cm³ sind schwierig herzustellen.

Das erfindungsgemäße Diffusormaterial wird beispielsweise als Diffusor bei Spektroskopie und Weltraumanwendungen, als Densitometerstandard, für Remote Sensing Targets, für diffus reflektierende Laser-Kavitäten und -Reflektoren, in Ulbrichtkugeln oder als Hüllmaterial für Lichtquellen eingesetzt. Es ist auch als Diffusor für Anwendungen bei hohen Temperaturen von mehr als 400 °C geeignet.

Hinsichtlich des erfindungsgemäßen Verfahrens zur Herstellung eines Formkörpers, der aus dem Diffusormaterial gemäß der Erfindung besteht oder der dieses Diffusormaterial enthält, wird die oben genannte Aufgabe ausgehend von einem Verfahren gemäss dem unabhängigen Anspruch 7 gelöst.

Das erfindungsgemäße Verfahren umfasst ein Schlickerverfahren, bei dem ein dem Formkörper vorgeschaltetes Zwischenprodukt in Form eines porösen Grünkörpers anfällt. Sowohl das Schlickerverfahren selbst als auch der Zwischenzustand im Grünkörper erlauben Maßnahmen zur Einstellung und Veränderung von Eigenschaften mit Auswirkungen auf das endgültige Diffusormaterial. Das erfindungsgemäße Verfahren unterscheidet sich von der aus dem Stand der Technik bekannten Verfahrensweise im Wesentlichen hinsichtlich der Art des eingesetzten Ausgangsmaterials.

- Gemäß Verfahrensschritt (b) wird ein Ausgangsmaterial aus synthetisch erzeugtem transparentem Quarzglas zerkleinert.
  Synthetisches, transparentes Quarzglas wird durch Flammenhydrolyse erhalten. Bei der industriellen Herstellung von synthetischem Quarzglas fallen SiO$_2$-reiche Primärteilchen auch als so genannter Soot- oder Filterstaub an. Diese Stäube können nach einer Vorverdichtung durch Granulation ebenfalls zu synthetischem, transparentem Quarzglas gesintert oder geschmolzen werden. Beispiele für geeignete Aufbau- oder Pressgranulierungsverfahren sind Rollgranulation in einem Granulierteller, Sprühgranulation, Zentrifugalzerstäubung, Wirbelschichtgranulation, Granulierverfahren unter Einsatz einer Granuliermühle, Kompaktierung, Walzenpressen, Brikettierung, Schülpenherstellung oder Extrudierung.
  Das synthetische, transparente Quarzglas ist dicht und es zeichnet sich durch hohe Reinheit aus. Unerwünschte Verunreinigungen sind maximal im sub-ppm-Bereich enthalten. Vorzugsweise liegt der Gesamt-Verunreinigungsgehalt an Li, Na, K, Mg, Ca, Fe, Cu, Cr, Mn, Ti, Al, Zr, Ni, Mo und W bei maximal 0,5 Gew.-ppm.

- Die Herstellung des synthetischen, transparenten Quarzglases als Ausgangsmaterial für die Herstellung des Schlickers ist mit hohem Material- und Kostenaufwand verbunden. Beim erfindungsgemäßen Verfahren ist aber dennoch das Zerkleinern des Quarzglases zu synthetischer SiO$_2$-Körnung vorgesehen. Die Oberfläche der beim Zerkleinern entstehenden Bruchflächen ist vergleichsweise reaktiv, was zur Herstellung eines stabilen Schlickers bei anschließenden Weiterverarbeitungsschritten beitragen kann.

  Diese gilt insbesondere auch für das weitere Vermahlen der SiO$_2$-Körnung innerhalb der Dispersionsflüssigkeit. Im Verlauf des Mahl- und Homogenisierungsprozesses kann die Dispersionsflüssigkeit die frisch erzeugten, reaktiven Oberflächen der Teilchen verändern und insbesondere Wechselwirkungen zwischen ihnen hervorrufen, was beim anschließenden Sinterprozess zu einer dichteren und stabileren Verbindung beitragen kann. Bei Dispersionen auf alkoholischer Basis oder wässriger Basis kann die polare Natur der Dispersion die erwähnten Wechselwirkungen der Teilchen untereinander noch weiter fördern, was das Trocknen und Sintern des Grünkörpers erleichtern kann.

- Es wird synthetisches, transparentes Quarzglas eingesetzt, das Hydroxylgruppen in einer Konzentration von 200 Gew.-ppm oder mehr und bevorzugt im Bereich von 450 +/- 50 Gew.-ppm enthält. Hydroxylgruppen in der spezifizierten Konzentration bewirken dem Diffusormaterial eine höhere Strahlenbeständigkeit gegenüber UV-Strahlung verleihen Ein Ausgangsmaterial aus Quarzglas mit einem Hydroxylgruppengehalt von mehr als 500 Gew.-ppm ist jedoch nicht bevorzugt.

- Sowohl beim Zerkleinern des Ausgangsmaterials gemäß Verfahrensschritt (b) als auch beim Nassmahlen der SiO$_2$-Körnung in Verfahrensschritt (c) werden Bruchflächen und Bruchstücke erzeugt, die in der Regel keine sphärische, sondern eine nichtsphärische, zerklüftete, splittrige Morphologie haben. Im Grünkörper verzahnen sich die diese SiO$_2$-Teilchen untereinander, so dass sich eine hohe Dichte und Festigkeit des Grünkörpers ergibt. Dies erleichtert das Sintern, das deswegen bei einer vergleichsweise niedrigen Temperatur von weniger als 1400 °C durchgeführt werden kann.

- Die Poren entstehen beim Sintern des Grünkörpers zu dem Diffusormaterial oder sie bleiben nach dem Sintern als Reste vorhandener, größerer Hohlräume erhalten. Die Anzahl und Größe der Poren im Diffusormaterial hängen von der Sintertemperatur und -dauer, aber im Wesentlichen auch von der Art der SiO$_2$-Körnung ab, aus der der Grünkörper aufgebaut ist. Im Unterscheid zum eingangs genannten Stand der Technik, bei dem der Grünkörper aus SiO$_2$-Granulatteilchen oder dichten SiO$_2$-Teilchen mit mehr oder weniger sphärischer Morphologie erzeugt wird, wird der Grünkörper beim Verfahren der Erfindung aus zerkleinerter und gemahlener SiO$_2$-Körnung aufgebaut. Dadurch ergeben sich vergleichsweise unregelmäßig geformte und unterschiedlich große Hohlräume im Grünkörper. Die nach dem Sintern eines derartigen Grünkörpers verbleibenden Poren sind daher herstellungsbedingt ebenfalls unregelmäßig geformt, und sie zeichnen sich insbesondere durch nach außen weisenden kantige Ausbuchtungen aus, die das Streuverhalten des Diffusormaterials effektiv beeinflussen.

Der Grünkörper hat in der Regel bereits eine Form, die der Endkontur des herzustellenden Diffusors (beziehungsweise der Gestalt des Diffusormaterials als Teil eines Formkörpers) nahe kommt. Es handelt sich beispielsweise um einen massiven Vollkörper, um einen Hohlkörper oder um eine Schicht auf einem Substrat. Der Grünkörper kann durch Ausgießen der Suspension in eine Form erhalten werden. Es sind aber auch andere Verarbeitungsmethoden für die Suspension geeignet, wie etwa Einsaugen in eine Form, Tauchen, Spritzen, Aufstreichen, Aufspachteln, Abziehen, Aufziehen, Aufrakeln und dergleichen.

Der Grünkörper wird getrocknet und zu einem gasdichten, mechanisch stabilen Rohling gesintert. Die Intensität des Sintervorgangs ist dabei so zu wählen, dass einerseits die Oberfläche nicht aufschmilzt, aber dennoch eine möglichst hohe Dichte des Rohlings erzielt wird. Die zum Sintern geeigneten Parameter (Sintertemperatur, Sinterdauer, Atmosphäre) sind anhand einfacher Versuche zu ermitteln

Insbesondere im Hinblick auf ein Diffusormaterial, das Neongas enthaltende Poren hat, wird das Sintern vorzugsweise in einer Atmosphäre durchgeführt, die Neon enthält.

Wird das Sintern in eine Neon-haltigen Atmosphäre durchgeführt, schließen sich die Poren bei einer Temperatur um 1375 ° C und das Neongas wird bei dieser Temperatur eingeschlossen. Der Brechungsindex der der Pore ergibt sich durch den Neon-Partialdruck bei Raumtemperatur, der in jedem Fall unterhalb des Atmosphären liegt. Wie oben in Bezug auf das Diffusormaterial bereits erläutert, ist Neongas dasjenige Gas mit dem niedrigsten Brechungsindex, das beim Sintern nicht aus den Poren verschwindet. Die Neon enthaltenden Poren haben daher einen vergleichsweise niedrigen Brechungsindex. Im Idealfall besteht die Sinteratmosphäre aus 100% Neon. Jedoch wird bereits eine signifikante Wirkung auf die Opazität erreicht, wenn das Neon-Gasgehalt in der Atmosphäre-während des Sinterns mindestens 5 Vol.-% beträgt; vorzugsweise liegt er bei mindestens 30 Vol.-% und am meisten bevorzugt beträgt er mindestens 50 Vol.-%.

Der nach dem Sintern erhaltene Rohling liegt als Schicht auf einem Substrat oder als massives Bauteil vor. Er bildet, bei auf etwaige Nachbehandlungen, wie etwa eine thermische Behandlung, eine Wasserstoffbeladung oder ein mechanische Bearbeitung, den Formkörper, sofern dieser vollständig aus dem Diffusormaterial besteht oder denjenigen Teil des Formkörpers, wenn dieser nur teilweise aus dem Diffusormaterial besteht.

Die im Rohling enthaltenen Poren wirken in der Quarzglas-Matrix als optische Störstellen und führen dazu, dass das Diffusormaterial - je nach Schichtdicke -

undurchsichtig-opak oder transluzent erscheint. Die Poren sind möglichst klein und gleichmäßig im Quarzglas-Diffusormaterial verteilt. Mindestens 80% der Poren haben eine maximale Porenabmessung von weniger als 20 $\mu$m, vorzugsweise weniger als 15 $\mu$m und besonders bevorzugt weniger als 10 $\mu$m. Der genannte Porenanteil von 80 % bezieht sich nur auf Poren mit einer Porengröße von mehr als 1 $\mu$m. Aus dem Rohling wird durch mechanische Bearbeitung wie Schneiden, Fräsen, Bohren, Schleifen und dergleichen ein vollständig aus dem Diffusormaterial bestehendes Bauteil erzeugt oder beispielsweise eine diffus streuende Reflektorschicht auf einem Substrat als Teil eines Formkörpers (in Form eines Reflektors).

Werden dem Schlicker Komponenten hinzugefügt, die sich beim Sintern zersetzen, kann die Porosität des Diffusormaterials nach dem Sintern zusätzlich beeinflusst werden.

Beim Sintern des Grünkörpers nimmt dessen Reflektivität deutlich ab. Ergebnis des Sinterprozesses ist ein porenhaltiger aber gasdichter (geschlossenporiger) Rohling. Es hat sich als günstig erwiesen, wenn das Quarzglas gerade dicht gesintert wird und keine offene Porosität mehr existiert. Wesentliche Parameter sind Sinterdauer und Sintertemperatur. Beim erfindungsgemäßen Verfahren ist die Sintertemperatur unterhalb von 1.400 °C.

Wasserstoff kann Defekte der Netzwerkstruktur von Quarzglas absättigen und die Strahlenbeständigkeit des Glases gegenüber UV-Strahlung verbessern. Im Hinblick darauf hat es sich bewährt, wenn der Rohling zur Beladung des opaken Quarzglases mit Wasserstoff bei einem Druck von mindestens 1 bar und einer Temperatur von weniger als 500 °C in einer wasserstoffhaltigen Atmosphäre behandelt wird.

Die Reinheit des Diffusormaterials und sein Hydroxylgruppengehalt hängen im Wesentlichen vom Halbzeug in Form des Rohlings und damit vom Ausgangsmaterial ab. Im Hinblick darauf wird vorzugsweise ein Ausgangsmaterial eingesetzt, das bei einer Wellenlänge von 1064 nm einen Absorptionskoeffizienten von 10 ppm/cm oder weniger, und bei einer Wellenlänge von 946 nm einen Absorptionskoeffizienten von 2000 ppm/cm oder weniger aufweist.

Die Wellenlängen 946 und 1064 nm sind typische Emissionslinien eine Nd:YAG-Lasers. Absorption bei der Wellenlänge um 1064 nm ist charakteristisch für metallische Verunreinigungen. Die hohe Reinheit des synthetischen Quarzglases als Ausgangsmaterial zeigt sich in einem niedrigen Absorptionskoeffizienten von 10 ppm/cm bei dieser Wellenlänge. Diese ist Voraussetzung für ein hochreines Diffusormaterial. Eine Absorption bei der Wellenlänge um 946 nm ist hingegen charakteristisch für Hydroxylgruppen in Quarzglas. Ein Absorptionskoeffizient von 2000 ppm/cm oder weniger ist ein Hinweis auf einen mittelhohen Hydroxylgruppengehalt. Dabei sollte der Absorptionskoeffizient bei dieser Wellenlänge jedoch bevorzugt nicht weniger als 1500 ppm/cm betragen.

Darüber hinaus wird beim erfindungsgemäßen Verfahren ein Ausgangsmaterial eingesetzt, das bei der Wellenlänge von 200nm einen Extinktionskoeffizienten k200 von weniger als 5 x10$^{-3}$ cm$^{-1}$ aufweist.

Der k-Wert ist der dekadische Extinktionskoeffizient (Konstante k) in der folgenden Formel:

$$\frac{I}{I_0} = (1-R)^2 \times 10^{-kd}$$

(I= transmittierte Intensität, I$_0$=einfallende Intensität, d=Probendicke, R=Reflexionsvermögen der Probenoberfläche).

Der k200-Wert bezeichnet den materialspezifischen Extinktionskoeffizienten für die UV-Wellenlänge 200 nm. Die Formel verknüpft die gemessene Transmission I/I$_0$ mit einer Materialeigenschaft, der Extinktion. Diese beinhaltet sowohl die Absorption des Materials, als auch die Streuung des Lichts im Materialvolumen.

Der Ausdruck (1-R)$^2$ beschreibt die Reflexionsverluste an den beiden Oberflächen der Messprobe (unter der Annahme von idealen Oberflächen, die selbst nicht streuen oder absorbieren). Falls die Volumenstreuung sehr klein ist, beschreibt der k-Wert im Wesentlichen die Absorption des Materials. Kommt der Hauptbeitrag zur Absorption von Verunreinigungen, wie dies bei der Wellenlänge von 200 nm typischerweise der Fall ist, so ist ein kleiner k-Wert ein indirektes Maß für die Reinheit des Quarzglases.

Ausführungsbeispiel

Nachfolgend wird die Erfindung anhand von Ausführungsbeispielen und einer Zeichnung näher erläutert. Als einzige Figur zeigt

**Figur 1** ein Fließdiagramm zur Erläuterung der Herstellung einer Ausführungsform des erfindungsgemäßen Diffusormaterials gemäß der Erfindung,

**Figur 2** eine mikroskopische Abbildung der Oberfläche des Diffusormaterials,

**Figuren 3 bis 6** Diagramme zum spektralen Reflexions- und Transmissionsverhalten des Diffusors, und

**Figur 7** ein Diagramm zum spektralen Reflexions- und Transmissionsverhalten des Diffusormaterials aus synthetisch erzeugtem Quarzglas.

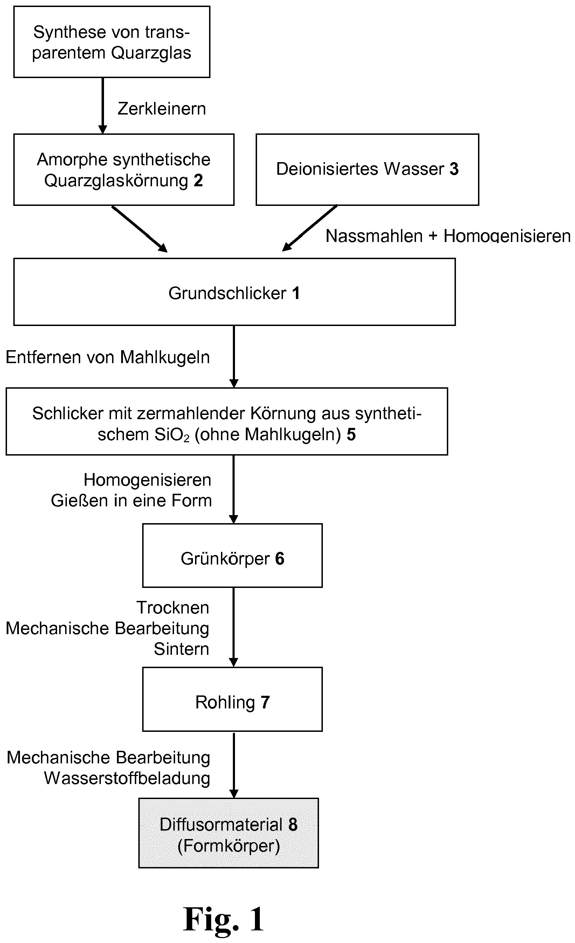

Nachfolgend wird das erfindungsgemäße Verfahren anhand der Herstellung eines plattenförmigen Diffusors aus Quarzglas zum Einsatz in einem Spektroskop zur Vermessung von Eigenschaften der Erdatmosphäre im Wellenlängenbereich von 250 bis 800 nm anhand Figur 1 beispielhaft erläutert.

Herstellung von Körnung aus synthetisch erzeugtem Quarzglas

In üblicher Weise wird durch Flammhydrolyse von SiCl$_4$ ein Zylinder aus transparentem Quarzglas mit einem Hydroxylgruppengehalt von 450 Gew.-ppm erzeugt. An einer beidseitig polierten Messprobe aus dem synthetischen Quarzglas wurden mittels eines Spektrometers (Perkin Elmer Lambda900/950) Transmissions- und Reflexionswerte im Wellenlängenbereich von 200 bis 2500 nm ermittelt.

Für die Wellenlänge von 1064 nm wurde anhand der Messdaten ein Absorptionskoeffizient von 5 ppm/cm und für die Wellenlänge von 946 nm einen Absorptionskoeffizienten von 1800 ppm/cm ermittelt. Der k200-Wert des synthetisch Quarzglases beträgt weniger als 3x10$^{-3}$ cm$^{-1}$

Herstellung eines SiO$_2$-Schlickers

Zur Herstellung von körnigem, gebrochenem Ausgangsmaterial wird der Quarzglaszylinder aus synthetischem Quarzglas zermahlen und durch Sieben wird die Größenfraktion der amorphen Quarzglasbruchstücke 2 mit Korngrößen im Bereich zwischen 250 $\mu$m und 650 $\mu$m extrahiert.

Für einen Ansatz von 10 kg Schlicker 1 (SiO$_2$-Wasser-Schlicker) werden in einer mit Quarzglas ausgekleideten Trommelmühle mit ca. 20 Liter Volumeninhalt, 8,2 kg der amorphen, synthetischen Quarzglaskörnung 2 mit 1,8 kg deionisiertem Wasser 3 mit einer Leitfähigkeit von weniger als 3 $\mu$S vermischt. Diese Mischung wird mittels Mahlkugeln aus Quarzglas auf einem Rollenbock bei 23 U/min während einer Dauer von 7 Tagen soweit vermahlen, dass sich ein homogener Grundschlicker 1 mit einem Feststoffgehalt von 78 % bildet. Im Verlauf des Nassvermahlens wird die Quarzglaskörnung weiter zerkleinert und es kommt infolge des in Lösung gehenden SiO$_2$ zu einer Absenkung des pH-Werts auf etwa 4.

Anschließend werden aus dem so erhaltenen Schlicker 1 die Mahlkugeln entfernt und der Schlicker weitere 12 Stunden homogenisiert. Die eingesetzte Quarzglaskörnung ist zu feinen SiO$_2$-Teilchen zermahlen, die eine Teilchengrößenverteilung aufweisen, die sich durch einen D$_{90}$-Wert um 40 $\mu$m und einen D$_{50}$-Wert von 10 $\mu$m auszeichnet.

Herstellung eines Grünkörpers und eines porösen SiO$_2$-Rohlings

Der Schlicker 5 wird in eine Druckgussform einer kommerziellen Druckgussmaschine gegossen und über eine poröse Kunststoffmembran unter Bildung eines porösen Grünkörpers 6 entwässert. Der Grünkörper 6 hat die Form einer Platte mit einem Außendurchmesser von 380 mm und einer Dicke von 40 mm.

Zum Entfernen von gebundenem Wasser wird der Grünkörper 6 bei etwa 90 °C fünf Tage lang in einem belüfteten Ofen getrocknet und nach dem Abkühlen wird der erhaltene immer noch poröse Grünkörper 6 mechanisch nahezu auf das Endmaß der herzustellenden Quarzglas-Diffusorplatte 8 bearbeitet.

## Herstellung eines Formkörpers aus opakem, synthetischem Quarzglas

Zum Sintern des Grünkörpers 6 wird dieser in einem Sinterofen unter Luft innerhalb von einer Stunde auf eine Heiztemperatur von 1395 °C aufgeheizt und bei dieser Temperatur 1h gehalten. Das Abkühlen erfolgt mit einer Abkühlrampe von 1 °C/min auf eine Ofentemperatur von 1000 °C und danach ungeregelt bei geschlossenem Ofen.

Bei einem alternativen Verfahren wird der Grünkörper 6 auf eine Temperatur von 1395 ° C in einem geschlossenen Sinterofen in einer Neon-Atmosphäre (etwa 100% Neon) gesintert. Nach 1 Stunde Heizdauer haben sich die Poren geschlossen und das Material wird auf eine Ofentemperatur von 1000 ° C mit einer Abkühlrate von 1° C und anschließender freier Abkühlung auf Raumtemperatur abgekühlt. Das so erhaltene Diffusormaterial enthält geschlossene Poren mit einem Innendruck, der unterhalb von Atmosphärendruck liegt und der nahezu vollständig von Neongas bestimmt wird.

Der so erhaltene Rohling 7 besteht aus nicht mehr offenporigem, synthetischem Quarzglas. Zur Beladung mit Wasserstoff wird der Rohling 7 zusammen mit der Referenzprobe aus transparentem Quarzglas mit denselben Abmessungen aus dem Ausgangsmaterial mit gleichen Abmessungen wie der Rohling 7 bei 400 °C unter reinem Wasserstoff und einem Druck von 1 bar 4h lang mit Wasserstoff beladen. Eine Vergleichsprobe blieb ohne diese Wasserstoffbeladung.

Aus dem Rohling 7 wurden Diffusorplatten 8 ausgeschnitten und geschliffen. Die Diffusorplatte 8 bildet in diesem Fall einen vollständig aus dem Diffusormaterial bestehenden Formkörper (8) gemäß der Erfindung.

## Materialeigenschaften

Das Diffusormaterial/der Formkörper 8 besteht aus einem gasdichten, geschlossenporigen, opaken Quarzglas mit einem Hydroxylgruppengehalt von 450 Gew.-ppm, einer mittleren Beladung mit Wasserstoff von $3 \times 10^{17}$ Molekülen/$cm^3$ und einer Dichte von 2,145 g/$cm^3$. Der Plattendurchmesser beträgt 80 mm und die Plattendicke 5 mm.

Der Hydroxylgruppengehalt wird durch Infrarotspektroskopie anhand der Methode von D. M. Dodd & D. M. Fraser bestimmt, veröffentlicht in "Optical Determinations of OH in Fused Silica" (J.A.P. 37, 3991 (1966). Anstelle des dort angegebenen Spektrometers wird ein FTIR-Spektrometer eingesetzt. Die Absorptionsbande bei ca. 3670 $cm^{-1}$ wird ausgewertet, bei hohem Hydroxylgruppengehalt die Absorptionsbande bei ca. 7200 $cm^{-1}$. Da es bei diffusen Materialien zu internen Reflexionen kommt, die den Absolutwert verfälschen können, werden alle Messungen an Probescheiben mit einer Dicke 3 mm durchgeführt um Vergleichbarkeit zu erzielen.

An der Referenzprobe der Wasserstoffbeladung wird der Wasserstoffgehalt ($H_2$-Gehalt) anhand einer Raman-Messung ermittelt, die von Khotimchenko et al. vorgeschlagen worden ist: "Determining the Content of Hydrogen Dissolved in Quartz Glass Using the Methods of Raman Scattering and Mass Spectrometry" Zhurnal Prikladnoi Spektroskopii, Vol. 46, No. 6 (Juni 1987), S. 987-991.

Das Diffusormaterial zeigt einen Gesamt-Verunreinigungsgehalt an Li, Na, K, Mg, Ca, Fe, Cu, Cr, Mn, Ti, Al, Zr, Ni, Mo und W von 0,4 Gew.-ppm. Die genannten Verunreinigungen werden mittels ICP-OES oder ICP-MS-Methoden ermittelt.

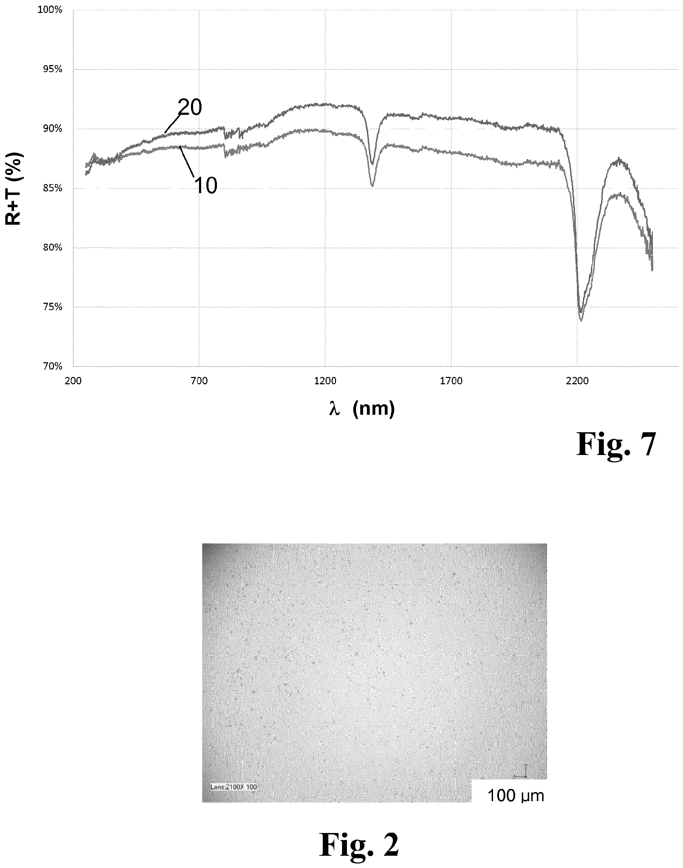

Visuell erscheint die Oberfläche weiß und matt. In der mikroskopischen Ansicht auf die geschliffene Oberfläche in **Figur 2** ist eine Vielzahl fein verteilter Poren 21 erkennbar. Die Gesamt-Porosität des Diffusormaterials beträgt etwa 2,5 %.Die Poren haben maximale Abmessungen von weniger als 20 $\mu$m; im Mittel (Medianwert) liegen die maximalen Abmessungen bei etwa 5 $\mu$m.

Da das erfindungsgemäße Diffusormaterial keine offene Porosität aufweist, ist eine einfache Dichtemessung nach dem archimedischen Prinzip möglich. Die Bestimmung der Porosität erfolgt anhand der Dichtemessung unter Berücksichtigung der spezifischen Dichte von transparentem, Quarzglas; diese liegt bei etwa 2,2 g/$cm^3$.

Um die Homogenität der Dichteverteilung zu überprüfen, wurden fünf Proben mit einem Volumen von jeweils 1 $cm^3$ aus unterschiedlichen Bereichen der Diffusorplatte 8 genommen und an diesen Proben die Dichte bestimmt. Die Spannweite der Dichtemessproben um die mittlere Dichte von 2,145 g/$cm^3$ beträgt weniger als 0,01 g/$cm^3$.

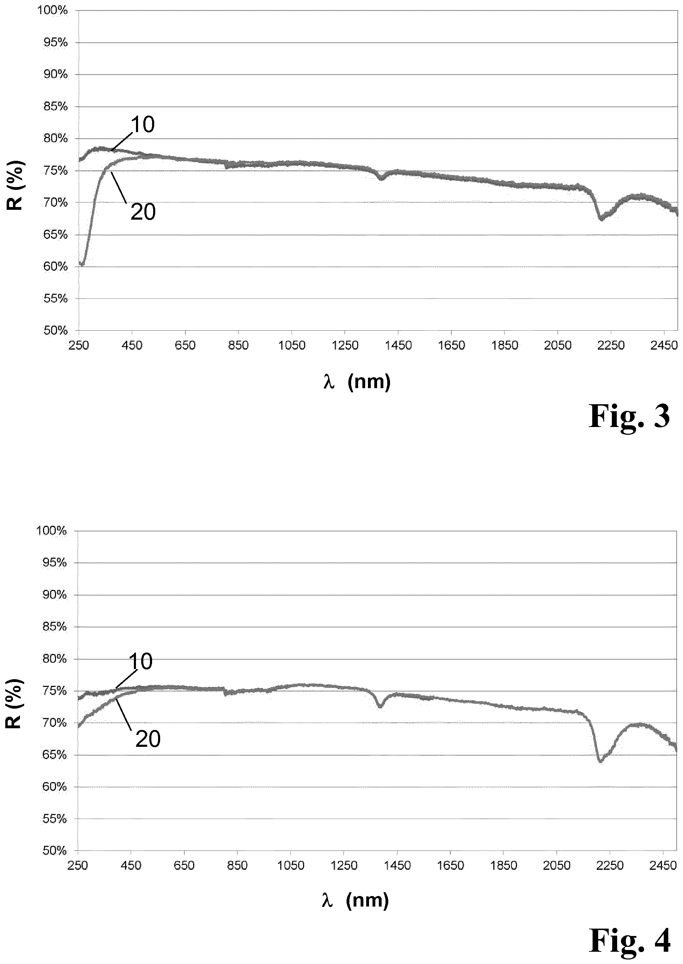

Die Diagramme der **Figuren 3 und 4** zeigen den in üblicher Weise mittels Ulbrichtkugel an der Diffusorplatte 8 (Dicke: 5 mm) gemessenen gerichtet-hemisphärischen Reflexionsgrad R (in %) über dem Wellenlängenbereich von 250 bis 2500 nm.

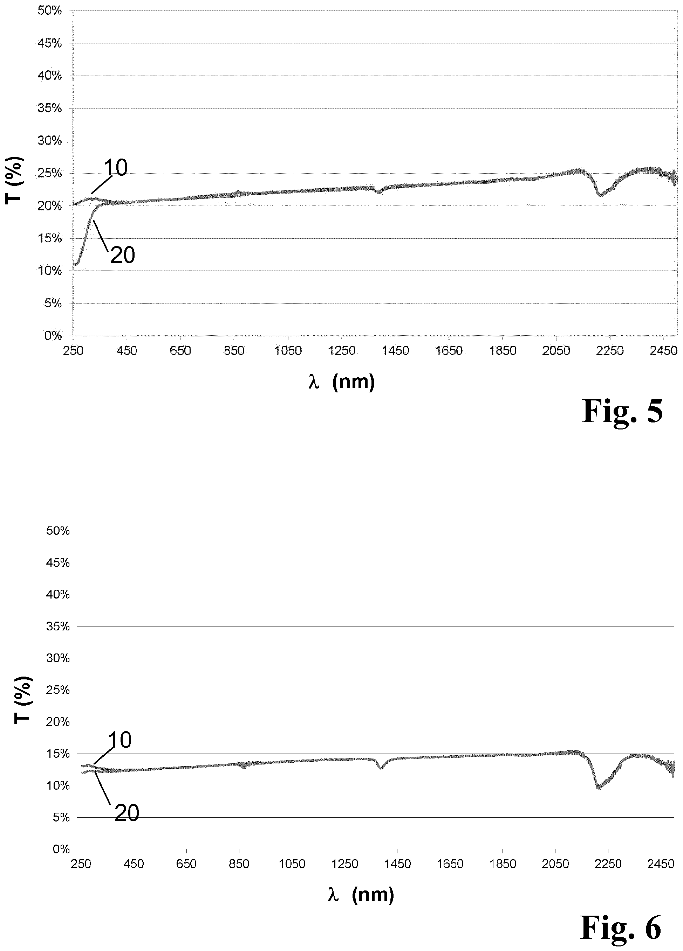

Die Diagramme der **Figuren 5 und 6** zeigen den mittels Ulbrichtkugel an der Diffusorplatte 8 (Dicke: 5 mm) gemessenen gerichtet-hemisphärischen Transmissionsgrad T (in %) über dem Wellenlängenbereich von 250 bis 2500 nm.

Alle Diagramme zeigen jeweils zwei Kurven. Diese verlaufen im Wesentlichen deckungsgleich, mit Ausnahme im UV-Wellenlängenbereich. Die dort mit der Bezugsziffer 10 bezeichnete obere Messkurve repräsentiert jeweils das Messergebnis vor einer UV-Bestrahlung der Messprobe; die untere Messkurve 2 den Verlauf nach dieser Bestrahlung. Bei der Bestrahlung wurden die Messproben mit 5-facher solarer Konstante Sc bestrahlt. Sc bezeichnet dabei die Energieflussdichte der Sonne pro Einheitsfläche und Zeit senkrecht zur Ausbreitungsrichtung im mittleren Abstand Erde-Sonne. Sc beträgt etwa 1.366 W/m$^2$ und die Gesamtbestrahlungsdosis 1,53 x10$^7$ mJ/cm$^2$.

Die Diagramme der Figuren 3 und 5 zeigen jeweils die Messergebnisse an Proben ohne Wasserstoffbeladung; die Diagramme der Figuren 4 und 6 die Messergebnisse an Proben mit Wasserstoffbeladung, wie oben erläutert.

Daraus ist erkennbar, dass das Diffusormaterial im Messwellenlängenbereich einen etwa konstanten gerichtet-hemisphärischen Transmissionsgrad T um 10 bis 25 % aufweist. Der Reflexionsgrad R liegt in diesem Wellenlängenbereich zwischen 60 und 80 %. Bereiche verminderter Reflexion finden sich bei einer Wellenlänge von 1400 nm und 2200 nm, was auf Absorption durch Hydroxylgruppen zurückzuführen ist. Im VUV-Bereich bei Wellenlängen um 250 nm liegt der Reflexionsgrad bei 70 % und damit höher als der von "Spectralon" ®. Die Messproben ohne Wasserstoffbeladung (Figuren 3 und 5) zeigen nach der Bestrahlung eine deutliche Abnahme sowohl des Reflexionsgrades R als auch des Transmissionsgrades T im UV-Wellenlängenbereich. Im Vergleich dazu zeigen die Messkurven der Proben mit Wasserstoffbeladung (Figuren 4 und 6) diese Abnahme nicht oder in deutlich geringerem Maße. Die induzierte Absorption unter 250 nm wird durch Defektzentren verursacht, die durch Wasserstoff ausgeheilt werden können.

Eine weiteren Probe aus dem Diffusormaterial mit den Probenabmessungen: Plattendurchmesser = 40 mm, Plattendicke = 7,5 mm wurde mit Wasserstoff anhand der oben erläuterten Methode beladen. An dieser Probe wurde die direkte hemisphärische Transmission "T" und die direkte hemisphärische Reflexion "R" über den Wellenlängenbereich von 250 nm bis 2500 nm gemessen. Das dafür verwendete Messinstrument der Firma AZ Technology trägt die Bezeichnung "TESA 2000".

Das Diagramm von **Figur 7** zeigt den spektralen Verlauf der Summe der gemessenen Intensitäten von Reflexion und Transmission (R+T) wobei dieser Art der Darstellung der folgende Zusammenhang von Reflexion R, Transmission T und Absorption A zugrunde liegt: R+T = 100 - A. Das bedeutet, dass höchstens der zu 100% der eingestrahlten Strahlungsintensität fehlende Anteil auf Absorption im Diffusormaterial der Messprobe zurückzuführen ist.

Das Diagramm enthält zwei Kurven 10, 20. Die Messkurve 10 repräsentiert das Messergebnis, das vor der oben näher definierten UV-Bestrahlung der Messprobe erhalten worden ist (5-fache solare Konstante Sc); die Messkurve 20 den Verlauf nach dieser UV-Bestrahlung.

Abgesehen von ausgeprägten Minima bei etwa 1350 und 2200 nm, die auf Absorption durch Hydroxylgruppen zurückzuführen sind, zeigen beide Messproben über den Wellenlängenbereich eine weitgehend konstante Intensität für R+T von deutlich mehr als 80%, und sogar im UV-Wellenlängenbereich von 250 nm bis 300 nm mehr als 85%. Der Unterschied zwischen beiden Kurven 10 und 20 liegt in der Ungenauigkeit von ±1,5%. Er kann auf geringfügige Abweichungen beim Reinigen der Proben oder auf Ausbleichen von Störstellen nach der UV-Bestrahlung bei der Messprobe 20 zurückzuführen sein.

## Patentansprüche

1. Diffusormaterial aus Poren enthaltendem Quarzglas mit einer chemischen Reinheit von mindestens 99,9% SiO$_2$, einem Cristobalitgehalt von höchstens 1% und einer Dichte im Bereich von 2,0 bis 2,18 g/cm$^3$, wobei mindestens 80% der Poren eine maximale Porenabmessung von weniger als 20 $\mu$m aufweisen, **dadurch gekennzeichnet, dass** das Quarzglas

   (i) synthetisch erzeugt ist,
   (ii) einen Hydroxylgruppengehalt von mehr als 200 Gew.-ppm aufweist, und
   (iii) Wasserstoff in einer Konzentration im Bereich von 10$^{17}$ Molekülen/cm$^3$ bis 10$^{19}$ Molekülen/cm$^3$ enthält.

2. Diffusormaterial nach Anspruch 1, **dadurch gekennzeichnet, dass** das Porenvolumen im Bereich von 0,9 bis 5, bevorzugt oberhalb von 2,5% liegt.

3. Diffusormaterial nach Anspruch 1 oder 2, **dadurch gekennzeichnet, dass** mindestens 80% der Poren eine maximale Porenabmessung von weniger als 10 $\mu$m aufweisen.

4. Diffusormaterial nach einem der vorhergehenden Ansprüche, **dadurch gekennzeichnet, dass** die Dichteverteilung in dem Sinne homogen ist, dass fünf über eine Messlänge von 5 cm gleichmäßig verteilte Dichtemessproben mit einem Probenvolumen von 1 cm$^3$ eine Spannweite der spezifischen Dichte von weniger als 0,01 g/cm$^3$ aufweisen.

5. Diffusormaterial nach einem der vorhergehenden Ansprüche, **dadurch gekennzeichnet, dass** die Poren Neon enthalten.

6. Diffusormaterial nach einem der vorhergehenden Ansprüche, **dadurch gekennzeichnet, dass** das Quarzglas einen Hydroxylgruppengehalt von 450 +/- 50 Gew.-ppm aufweist.

7. Verfahren zum Herstellen eines mindestens teilweise aus dem synthetisch erzeugten Diffusormaterial nach einem der Ansprüche 1 bis 6 , indem aus einem Schlicker, der eine Dispersionsflüssigkeit und $SiO_2$-Pulverteilchen mit einer Reinheit von mindestens 99,9% $SiO_2$ enthält ein Grünkörper erzeugt und der Grünkörper durch Sintern zu dem Diffusormaterial verarbeitet wird, umfassend die folgenden Verfahrensschritte:

> (a) Erzeugen eines Ausgangsmaterials aus synthetisch erzeugtem, transparentem Quarzglas anhand eines Syntheseprozesses, der die Flammhydrolyse einer siliziumhaltigen Ausgangsverbindung umfasst, wobei das Quarzglas einen Hydroxylgruppengehalt von mehr als 200 Gew.-ppm und bei der Wellenlänge von 200 nm einen Extinktionskoeffizienten k200 von weniger als 5 x$10^{-3}$ $cm^{-1}$ aufweist,
> (b) Zerkleinern des Ausgangsmaterials aus synthetisch erzeugtem, transparentem Quarzglas zu einer $SiO_2$-Körnung,
> (c) Nassmahlen der $SiO_2$-Körnung in der Dispersionsflüssigkeit unter Bildung des Schlickers aus der Dispersionsflüssigkeit und $SiO_2$-Pulverteilchen, von denen die Mehrheit eine Größe von weniger als 10 $\mu$m hat,
> (d) Formen des Schlickers zu dem Grünkörper aus den $SiO_2$-Pulverteilchen,
> (e) Sintern des Grünkörpers zu dem Diffusormaterial bei einer Sintertemperatur unterhalb von 1.400 °C, und
> (f) Beladen das Diffusormaterials mit Wasserstoff durch Behandlung bei einem Druck von mindestens 1 bar und einer Temperatur von weniger als 500 °C in einer wasserstoffhaltigen Atmosphäre.

8. Verfahren nach Anspruch 7, **dadurch gekennzeichnet, dass** dem Schlicker Komponenten hinzugefügt werden, die sich beim Sintern zersetzen.

9. Verfahren nach einem der Ansprüche 7 oder 8, **dadurch gekennzeichnet, dass** das Sintern in einer Neon enthaltenden Atmosphäre durchgeführt wird.

10. Verfahren nach einem der Ansprüche 7 bis 9, **dadurch gekennzeichnet, dass** das Ausgangsmaterial bei einer Wellenlänge von 1064 nm einen Absorptionskoeffizienten von 10 ppm/cm oder weniger, und bei einer Wellenlänge von 946 nm einen Absorptionskoeffizienten von 2000 ppm/cm oder weniger aufweist.

11. Formkörper aus einem Diffusormaterial nach einem der Ansprüche 1 bis 6 für den Einsatz als Diffusor bei Spektroskopie- und Weltraumanwendungen, Densitometer-Standards, Remote Sensing Targets, Laser-Kavitäten und Laserreflektoren, Ulbrichtkugeln oder als Hüllmaterial für Lichtquellen.

## Claims

1. Diffuser material of pore-containing quartz glass with a chemical purity of at least 99.9% $SiO_2$, a cristobalite content of not more than 1%, and a density in the range of 2.0 to 2.18 $g/cm^3$, whereby at least 80% of the pores have a maximum pore dimension of less than 20 $\mu$m**characterized in that** the quartz glass

> (i) is produced synthetically,
> (ii) has a hydroxyl group content in the range of more than 200 wt. ppm, and
> (iii) contains hydrogen in a concentration in the range of $10^{17}$ molecules/$cm^3$ to $10^{19}$ molecules/$cm^3$.

2. Diffuser material according to claim 1, **characterized in that** the pore volume is in the range of 0.9 to 5, preferably above 2.5%.

3. Diffuser material according to claim 1 or 2, **characterized in that** at least 80% of the pores have a maximum pore dimension of less than 10 $\mu$m.

4. Diffuser material according to any one of the preceding claims, **characterized in that** the density distribution is homogeneous in the sense that five density measurement samples that are evenly distributed over a measurement length of 5 cm and have a sample volume of 1 $cm^3$ have a specific density range of less than 0.01 $g/cm^3$.

5. Diffuser material according to any one of the preceding claims, **characterized in that** the pores contain neon.

6. Diffuser material according to any one of the preceding claims, **characterized in that** the quartz glass has a hydroxyl group content of 450 +/- 50 wt. ppm.

7. Method for producing a molded body consisting at least in part of the synthetically produced diffuser material according to any one of claims 1 to 6, in that a green body is produced from a slurry containing a dispersion liquid and $SiO_2$ powder particles with a purity of at least 99.9% $SiO_2$, and the green body is processed by sintering into the diffuser material, comprising the following method steps:

> (a) providing a starting material of synthetically produced transparent quartz glass on the basis of a synthesis process which comprises the flame hydrolysis of a silicon-containing starting compound, wherein said starting material has a hydroxyl group content of more than 200 wt. ppm, and at a wavelength of 200 nm said starting material has an extinction coefficient k200 of less than $5 \times 10^{-3}$ cm$^{-1}$,

(b) comminuting the starting material of synthetically produced transparent quartz glass into $SiO_2$ grains,

(c) wet grinding the $SiO_2$ grains in the dispersion liquid so as to form the slurry of the dispersion liquid and $SiO_2$ powder particles, of which the majority has a size of less than 10 $\mu$m,

(d) molding the slurry into the green body of the $SiO_2$ powder particles,

(e) sintering the green body at a sintering temperature below 1,400°C so as to form the diffusor material, and

(f) loading the diffuser material with hydrogen comprising a treatment at a pressure of at least 1 bar and at a temperature of less than 500°C in a hydrogen-containing atmosphere.

8. Method according to claim 7, **characterized in that** components which decompose during sintering are added to the slurry.

9. Method according to any one of claims 7 or 8, **characterized in that** sintering is carried out in a neon-containing atmosphere.

10. Method according to any one of claims 7 to 9, **characterized in that** the starting material at a wavelength of 1064 nm has an absorption coefficient of 10 ppm/cm or less, and at a wavelength of 946 nm an absorption coefficient of 2000 ppm/cm or less.

11. Molded body consisting of a diffuser material according to any one of claims 1 to 6 for use as a diffuser in spectroscopy and space applications, densitometer standards, remote sensing targets, laser cavities and laser reflectors, integrating spheres or as a cladding material for light sources.


## Revendications

1. Matériau diffuseur composé de verre de quartz contenant des pores avec une pureté chimique d'au moins 99,9 % de $SiO_2$, une teneur en cristobalite de 1 % au maximum et une densité dans la plage de 2,0 à 2,18 g/cm$^3$, dans lequel au moins 80 % des pores présentent une dimension de pores maximale inférieure à 20 $\mu$m, **caractérisé en ce que** le verre de quartz

(i) est produit de manière synthétique,
(ii) présente une teneur en groupes hydroxyle supérieure à 200 ppm en poids, et
(iii) contient de l'hydrogène en une concentration dans la plage de $10^{17}$ molécules par/cm$^3$ à $10^{19}$ molécules/cm$^3$.

2. Matériau diffuseur selon la revendication 1, **caractérisé en ce que** le volume de pores se situe dans la plage de 0,9 à 5, de manière préférée est supérieur à 2,5 %.

3. Matériau diffuseur selon la revendication 1 ou 2, **caractérisé en ce qu'**au moins 80 % des pores présentent une dimension de pore maximale inférieure à 10 $\mu$m.

4. Matériau diffuseur selon l'une quelconque des revendications précédentes, **caractérisé en ce que** la distribution des densités est homogène en ce sens que cinq échantillons de mesure de densité répartis de manière régulière sur une longueur de mesure de 5 cm avec un volume d'échantillons de 1 cm$^3$ présentent une envergure de la densité spécifique inférieure à 0,01 g/cm$^3$.

5. Matériau diffuseur selon l'une quelconque des revendications précédentes, **caractérisé en ce que** les pores contiennent du néon.

6. Matériau diffuseur selon l'une quelconque des revendications précédentes, **caractérisé en ce que** le verre de quartz présente une teneur en groupes hydroxyle de 450 $\pm$ 50 ppm en poids.

7. Procédé servant à fabriquer un matériau diffuseur produit de manière synthétique selon l'une quelconque des revendications 1 à 6, en ce qu'un corps vert est produit à partir d'une barbotine, qui contient un liquide de dispersion et des particules pulvérulentes de $SiO_2$ avec une pureté d'au moins 99,9 % de $SiO_2$ et le corps vert est transformé par frittage en le matériau diffuseur, comprenant les étapes de procédé qui suivent :

(a) la production d'un matériau de départ à partir d'un verre de quartz produit de manière synthétique, transparent à l'aide d'un processus de synthèse, qui comprend l'hydrolyse à la flamme d'un composé de départ contenant du silicium, dans lequel le verre de quartz présente une teneur en groupes hydroxyle supérieure à 200 ppm en poids et, pour la longueur d'onde de 200 nm, un coefficient d'extinction molaire k200 inférieur à $5 \times 10^{-3}$ cm$^{-1}$ ;

(b) la fragmentation du matériau de départ composé du verre de quartz produit de manière synthétique, transparent en des grains de $SiO_2$ ;

(c) le broyage à l'état humide des grains de $SiO_2$ dans le liquide de dispersion en formant la barbotine à partir du liquide de dispersion et des particules pulvérulentes de $SiO_2$, dont la majo-

rité présente une taille inférieure à 10 µm ;
(d) le façonnage de la barbotine en le corps vert à partir des particules pulvérulentes de $SiO_2$ ;
(e) le frittage du corps vert pour former le matériau diffuseur à une température de frittage inférieure à 1.400 °C ; et
(f) le chargement du matériau diffuseur en hydrogène par un traitement à une pression d'au moins 1 bar et à une température inférieure à 500 °C dans une atmosphère contenant de l'hydrogène.

8. Procédé selon la revendication 7, **caractérisé en ce que** sont ajoutés à la barbotine des composants, qui se décomposent lors du frittage.

9. Procédé selon l'une quelconque des revendications 7 ou 8, **caractérisé en ce que** le frittage est effectué dans une atmosphère contenant du néon.

10. Procédé selon l'une quelconque des revendications 7 à 9, **caractérisé en ce que** le matériau de départ présente pour une longueur d'onde de 1064 nm un coefficient d'absorption de 10 ppm/cm ou moins, et, pour une longueur d'onde de 946 nm, un coefficient d'absorption de 2000 ppm/cm ou moins.

11. Corps moulé à partir du matériau diffuseur selon l'une quelconque des revendications 1 à 6 pour l'emploi en tant que diffuseur pour des applications en spectroscopie et dans le domaine spatial, pour des normes de densimètres, des cibles de télédétection, des cavités de laser et des réflecteurs laser, des sphères intégratrices ou en tant que matériau enveloppant pour des sources de lumière.

Synthese von transparentem Quarzglas

↓ Zerkleinern

Amorphe synthetische
Quarzglaskörnung **2**

Deionisiertes Wasser **3**

Nassmahlen + Homogenisieren

Grundschlicker **1**

Entfernen von Mahlkugeln

Schlicker mit zermahlender Körnung aus synthetischem $SiO_2$ (ohne Mahlkugeln) **5**

Homogenisieren
Gießen in eine Form

Grünkörper **6**

Trocknen
Mechanische Bearbeitung
Sintern

Rohling **7**

Mechanische Bearbeitung
Wasserstoffbeladung

Diffusormaterial **8**
(Formkörper)

# Fig. 1

Fig. 3

Fig. 4

Fig. 5

Fig. 6

**Fig. 7**

100 µm

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5462705 A
- DE 10243953 A1
- WO 2008040615 A1
- US 5674792 B
- US 20100316858 A1
- US 20030027705 A1

**In der Beschreibung aufgeführte Nicht-Patentliteratur**

- **JOHN D. MASON et al.** A new Robust Commercial Diffuse Reflector for UV-VIS Applications. *Journal Applied Optics,* 25. August 2015, vol. 54 (25), ISSN 0003-6935, http://dx.doi.org/10.1364/AO.54.007542
- **D. M. DODD ; D. M. FRASER.** Optical Determinations of OH in Fused Silica. *J.A.P.,* 1966, vol. 37, 3991
- **KHOTIMCHENKO et al.** Determining the Content of Hydrogen Dissolved in Quartz Glass Using the Methods of Raman Scattering and Mass Spectrometry. *Zhurnal Prikladnoi Spektroskopii,* Juni 1987, vol. 46 (6), 987-991